# EUROPÄISCHE PATENTSCHRIFT

(11) **EP 1 776 603 B1**
(45) Veröffentlichungstag und Bekanntmachung des Hinweises auf die Patenterteilung: **11.09.2019**
(21) Anmeldenummer: 05774601.8
(22) Anmeldetag: 15.07.2005
(51) Int. Cl.: G01S 13/93, G01S 15/12, G01S 15/18, G01S 15/93

(54) **VORRICHTUNG FÜR EIN KRAFTFAHRZEUG**
DEVICE FOR A MOTOR VEHICLE
DISPOSITIF POUR UN VEHICULE AUTOMOBILE

(30) Priorität: 05.08.2004 DE 102004037992; 25.09.2004 DE 102004046589
(43) Veröffentlichungstag der Anmeldung: 25.04.2007
(73) Patentinhaber: Volkswagen Aktiengesellschaft, 38440 Wolfsburg (DE)
(72) Erfinder: MILARK, Andreas, 38448 Wolfsburg (DE); ROHLFS, Michael, 38531 Rötgesbüttel (DE); CHLOSTA, Sven, 38547 Calberlah (DE)
(86) Internationale Anmeldenummer: PCT/EP2005/007728
(87) Internationale Veröffentlichungsnummer: WO 2006/015687

(56) Entgegenhaltungen:
- EP-A- 0 048 958
- EP-A- 0 305 907
- WO-A-02/084329
- WO-A-03/087874
- WO-A1-03/087874
- DE-A1- 4 335 728
- US-A- 4 326 273
- US-A- 4 785 429
- US-A- 5 508 974

## Beschreibung

Die Erfindung betrifft ein Verfahren zur Vermessung einer möglichen Parklücke gemäß dem Oberbegriff des Anspruchs 1 sowie eine entsprechende Vorrichtung für ein Kraftfahrzeug gemäß dem Oberbegriff des Anspruchs 5.

Aus der WO 02/084329 A2 ist ein Fahrerassistenzsystem für ein Kraftfahrzeug umfassend wenigstens einen Sensor zum Erfassen der Entfernung des Fahrzeuges von einem Objekt und eine Steuereinheit zum Ansteuern von Funktionsgruppen des Kraftfahrzeuges in Abhängigkeit vom Erfassungsergebnis des Sensors bekannt. Die Steuereinheit ist dabei zwischen einer Einparkhilfe-Betriebsart und einer Pre-Crash-Betriebsart abhängig von der Geschwindigkeit des Fahrzeuges umschaltbar. Die Umschaltung zwischen einer Geschwindigkeitsregelung-Betriebsart und der Pre-Crash-Betriebsart ist dabei abhängig von einer von dem Sensor gemessenen Bewegung eines Objektes relativ zu dem Kraftfahrzeug.

Aus der EP 0 305 907 B1 ist eine Einparkhilfevorrichtung für Kraftfahrzeuge bekannt. Das Kraftfahrzeug weist dabei einen an der Fahrzeugaußenseite angeordneten Sender auf, der ein in Richtung auf eine Parklücke abgestrahltes Sendesignal aussendet, wobei ein zugeordneter Empfänger das Reflexsignal empfängt. Das Sendesignal wird auf einen kleinen Ausstrahlwinkel begrenzt und quer zur Längsachse des Kraftfahrzeugs abgestrahlt, so dass während der Vorbeifahrt an einer Parklücke sich die gewonnenen Reflexsignale im Bereich der Parklücke deutlich von dem Reflexsignal außerhalb der Parklücke unterscheiden. Aus dieser deutlichen Signalunterscheidung wird in einer Vergleichseinrichtung unter Berücksichtigung eines Wegsignals eine Länge der Parklücke ermittelt.

Aus der WO 03/087874 A1 ist ein Verfahren zum Betreiben eines Einparkhilfesystems für ein Fahrzeug mit wenigstens einem Abstandssensor bekannt, der den seitlichen Nahbereich des Fahrzeuges zumindest abschnittsweise erfasst. Das Fahrzeug weist weiterhin einen Wegsensor auf, wobei ein Steuergerät aus den während des Vorbeifahrens an der Parklücke gemessenen Werten der Sensoren die Länge oder Breite der Parklücke bestimmt. Dabei wird die Länge oder Breite der Parklücke um einen Korrekturwert korrigiert oder es wird je nach Geschwindigkeit des Fahrzeuges während des Vorbeifahrens an der Parklücke die Messung mittels des Abstandssensors in unterschiedlichen Zeitintervallen durchgeführt.

In der Druckschrift US 5 508 974 A wird bei einem Verfahren bzw. Vorrichtung zur Ultraschall-Abstandsmessung vorgeschlagen, nur dann einen Sendeimpuls als Kontrollmessung für eine Ultraschall-Abstandsmessung durchzuführen, wenn bei dem ersten Sendeimpuls ein Echosignal empfangen wurde. Weiter wird vorgeschlagen, ein Zeitfenster zu bilden, in das das erwartete Echosignal fällt, wenn es von einem Hindernis reflektiert wird. Dadurch werden vorteilhaft Störsignale unterdrückt und die Messzeit beschleunigt, so dass bei Verwendung zur Abstandsmessung in einem Kraftfahrzeug stets ein aktueller Messwert unter Berücksichtigung der Fahrzeuggeschwindigkeit und des zurückgelegten Weges vorliegt.

Die Druckschrift WO 03/087874 A1 betrifft ein Verfahren zum Betreiben eines Einparkhilfesystems für ein Fahrzeug, mit wenigstens einem den seitlichen Nahbereich des Fahrzeuges wenigstens abschnittsweise erfassenden Abstandssensor und mit wenigstens einem den von dem Fahrzeug zurückgelegten Weg erfassenden Wegsensor, wobei ein Steuergerät aus den während des Vorbeifahrens an einer Parklücke gemessenen Werten der Sensoren die Länge und/oder Breite der Parklücke bestimmt. Die gemessene Länge und/oder Breite der Parklücke wird um einen Korrekturwert korrigiert und/oder je nach Geschwindigkeit des Fahrzeuges erfolgt während des Vorbeifahrens an der Parklücke die Messung mittels des Abstandssensors in unterschiedlichen Zeitintervallen.

Aufgabe der Erfindung ist es, die Vermessung einer möglichen Parklücke eines Kraftfahrzeugs zu verbessern.

Diese Aufgabe wird durch ein Verfahren zur Vermessung einer möglichen Parklücke mit den Merkmalen des Anspruchs 1 sowie durch eine entsprechende Vorrichtung mit den Merkmalen des Anspruchs 5 gelöst. Bevorzugte Ausgestaltungen der Erfindung sind Gegenstand der Unteransprüche.

Bei der erfindungsgemäßen Vorrichtung ist durch die Ansteuervorrichtung die Messempfangszeit des Abstandssensors veränderbar. Mit einer als konstant anzusehenden Schallgeschwindigkeit lässt sich die Entfernungserfassung dadurch variieren, dass eine unterschiedliche Messempfangszeit einstellbar ist. Wird die Messempfangszeit gering gewählt, so ist eine schnelle Wiederholung der Messung möglich. Bei längeren Messempfangszeiten sinkt die Wiederholgeschwindigkeit der Messung. Somit sinkt auch die Auflösungsgenauigkeit in Fahrtrichtung bei einem fahrenden Fahrzeug, da während der Messung eine von der Fahrgeschwindigkeit abhängige Strecke zurückgelegt wird. Bei hoher Wiederholgeschwindigkeit können der Anfang und das Ende einer Parklücke besonders gut und genau erfasst werden. Eine möglichst genaue Erfassung ist insbesondere dann wichtig, wenn die Parklücke eine Länge im Bereich der minimal nötigen Parklückenlänge aufweist, wobei die minimal nötige Parklückenlänge vom Fahrzeugtyp und/oder einer möglichen Beladung (z.B. Fahrradträger auf einer Anhängerkupplung oder einer Heckklappe) abhängig ist. Um den Fahrzeugführer genau informieren zu können, ob eine ausreichend große Parklücke vorliegt, ist die Messempfangszeit des Abstandssensors veränderbar.

Nach der Detektion eines Anfangs der Parklücke vergrößert daher die Ansteuervorrichtung die Messempfangszeit oder setzt diese auf einen Maximalwert. Weiterhin verkleinert die Ansteuervorrichtung bei Vorbeifahrt an der Parklücke vor Erreichen einer minimal notwendigen Parklückenlänge oder im Bereich der minimalen Parklückenlänge die Messempfangszeit oder setzt diese auf einen Minimalwert.

Die Messempfangszeit ist also zwischen mindestens zwei Einstellungen für Empfangszeiten veränderbar. Dabei ist es vorteilhaft, wenn die Messempfangszeit durch die Ansteuervorrichtung derart veränderbar ist, dass im Wesentlichen ein Abstand kleiner einer Fahrzeugbreite, insbesondere bis etwa 1,5 m überwacht wird. Während der Parkplatzsuche fährt ein Fahrzeug an parkenden Fahrzeugen vorbei und kann durch eine geringe bzw. kurze Messempfangszeit das Ende eines parkenden Fahrzeugs besonders genau detektieren. Üblicherweise fährt das eine Parklücke suchende Fahrzeug in einem Abstand geringer einer Fahrzeugbreite an bereits parkenden Fahrzeugen vorbei, so dass eine Messempfangszeit zur Erfassung dieses Entfernungsbereiches ausreichend bzw. vorteilhaft ist.

Weiterhin vorteilhaft ist es, dass die Messempfangszeit durch die Ansteuervorrichtung derart veränderbar ist, dass im Wesentlichen ein Abstand kleiner von zwei Fahrzeugbreiten, insbesondere bis etwa 3,5 m überwacht wird. Sofern durch das eine Parklücke suchende Fahrzeug eine mögliche Parklücke detektiert wird, sind Objekte außerhalb dieser möglichen Parklücke üblicherweise nicht von Belang. Es hat sich gezeigt, dass dabei eine Überwachung von < zwei Fahrzeugbreiten sinnvoll ist.

Dadurch, dass die Ansteuervorrichtung die Messempfangszeit zur Vermessung der Länge einer möglichen Parklücke verändert, kann der Beginn und das Ende der Parklücke besonders genau detektiert werden. Weiterhin von Belang ist während der Parklückenvermessung der Verlauf bzw. die Entfernung eines gegebenenfalls vorhandenen Bordsteins. Bei Erfassung eines Bordsteins kann sich das Fahrzeug in einem anschließenden Einparkvorgang an diesem Bordstein orientieren und gegebenenfalls ausrichten (eingeparkter Zustand). Anstelle des Bordsteins können auch der Verlauf anderer Objekte oder Hindernisse (z.B. Leitplanken, Zäune etc.) erfasst werden.

Dadurch, dass mindestens ein Abstandssensor des Kraftfahrzeugs als Ultraschallsensor ausgeführt ist, der die Parklücke vermisst, kann ein kostengünstiger und weit verbreiteter Abstandssensor zur Parklückenvermessung eingesetzt werden.

Um einen Bordstein oder eine Fahrbahnbegrenzung innerhalb mindestens einer der Messempfangszeiten zu erfassen, ist der Abstandssensor im Kraftfahrzeug derart angeordnet, dass er ein Objekt von der Höhe eines üblichen Bordsteines erfassen kann. Dazu muss der Strahlungskegel des Abstandssensors den Bordstein innerhalb einer der Messempfangszeiten derart erfassen, dass reflektierte Sensorstrahlen durch den Abstandssensor aufgefangen werden.

Als Fahrbahnbegrenzungen können in diesem Sinn auch Leitplanken, Mauern, Pfähle, Zäune, Anpflanzungen, wie beispielsweise Sträucher oder Hecken, Fahrbahnmarkierungen etc. dienen. Sofern mit mindestens einem Abstandssensor und/oder der Ansteuervorrichtung ein Abstandsverlauf zu einem Objekt und/oder einer Fahrbahnbegrenzung erfassbar ist, ist es möglich, das parkende Fahrzeug an diesem Abstandsverlauf auszurichten.

In einer weiteren vorteilhaften Ausgestaltung ist die Messempfangszeit geschwindigkeits- und/oder fahrzeugumgebungs- und/oder positionsabhängig veränderbar. Dazu kann beispielsweise allein aufgrund der Fahrzeuggeschwindigkeit ermittelt werden, ob eine Veränderung der Messempfangszeit bzw. ob eine Aktivierung des Abstandssensors sinnvoll ist, da Einparkvorgänge in der Regel mit geringer Geschwindigkeit durchgeführt werden. Die Messempfangszeit kann auch aufgrund der Fahrzeugumgebung, wie z. B. am Fahrbahnrand parkende Fahrzeuge, veränderbar sein, nämlich dann, wenn mögliche Parklücken detektiert werden. Dieses gilt auch für eine mögliche Positionsabhängigkeit der Messempfangszeit. Sofern sich das Fahrzeug in einer bestimmten Position zu einer möglichen Parklücke befindet, wird die Messempfangszeit verändert, um Anfang und Ende dieser Parklücke möglichst genau zu bestimmen. Es ist auch möglich, dass der Fahrzeugführer aktiv in einen Parklückensuchmodus schaltet oder diesen bewusst deaktivieren kann. In diesem Modus sendet der Abstandssensor die oben genannten Signale zur Parklückenvermessung aus.

Auch vorteilhaft ist es, wenn aufgrund des Fahrverhaltens des Fahrzeugführers ersichtlich ist, dass er sich auf Parkplatzsuche befindet. In diesem Fall könnte das System automatisch aktiviert und die Messempfangszeit zur Erfassung einer Parklücke verändert werden.

Eine Parklücke, deren Länge für das Fahrzeug ausreicht, kann dem Fahrzeugführer akustisch und/oder optisch und/oder haptisch signalisiert werden. Dabei ist es besonders vorteilhaft, wenn der abgelegte Wert der minimal nötigen Parklückenlänge im Kraftfahrzeug einstellbar, dies bedeutet veränderbar, ist. Der Grund hierfür kann darin liegen, dass sich manche Fahrzeugführer während des Einparkvorgangs wohler fühlen, wenn sie zusätzlichen Rangierraum zur Verfügung haben. Dieses kann jedoch auch sinnvoll sein, wenn ein eventuelles Be- und Entladen oder eine Türen- oder Klappenöffnung zusätzlichen Raum benötigt. Dabei ist nur eine Einstellung des Wertes größer der fahrzeugseitig erforderlichen Länge sinnvoll. Eine Einstellung und/oder Visualisierung der Parklücke und/oder der minimal nötigen Parklücke kann beispielsweise über eine Multifunktionsbedieneinrichtung erfolgen, wie sie heutzutage in Fahrzeugen mit kombinierten Navigations- und Radio- und/oder Telefoneinrichtungen bereits realisiert ist. Die Vorrichtung kann weiterhin mit einem Kamerasystem ergänzt werden, welches die Parklücke kontinuierlich oder mit einem einmaligen Bild aufnimmt, um dem Fahrzeugführer eine Visualisierung der möglichen Parklücke zu bieten. So können sich beispielsweise zusätzliche Markierungen in der Parklücke oder auf extra Schildern befinden (z.B. Behindertenparkplatz), welche der Fahrzeugführer aus dieser Zusatzinformation erkennen kann.

Die Aufgabe wird weiterhin durch ein erfindungsgemäßes Verfahren gelöst. Zur Vermessung einer möglichen Parklücke durch ein an der Parklücke vorbeifahrendes Kraftfahrzeug, wobei durch eine Erfassungsvorrichtung im Kraftfahrzeug die Länge der Parklücke ermittelt wird und wobei während einer Aktivierungszeit mit einem Abstandssensor Messsignale ausgesendet und innerhalb einer Messempfangszeit an Objekten reflektierte Messsignale durch den Abstandssensor erfasst werden, wird die Messempfangszeit zur Vermessung einer Parklückenlänge verändert. Dadurch lässt sich durch das fahrende Fahrzeug besonders genau ein Beginn und ein Ende einer Parklücke vermessen. Dadurch, dass bei Detektion eines Anfangs der Parklücke die Messempfangszeit vergrößert oder auf einen Maximalwert gesetzt wird, kann nun der mögliche Parkbereich auf das Vorhandensein von Objekten überwacht werden. Es ist weiterhin möglich, in dem überwachten Abstandsbereich einen Fahrbahnverlauf oder einen Bordstein zu detektieren.

Dadurch, dass die Messempfangszeit bei Vorbeifahrt an der Parklücke vor einer minimal notwendigen Parklückenlänge oder im Bereich der minimal notwendigen Parklückenlänge verkleinert oder auf einen Minimalwert gesetzt wird, kann die Entfernungsmessung mit hoher Wiederholgeschwindigkeit durchgeführt werden. Dieses führt bei dem an der Parklücke vorbeifahrenden Fahrzeug zu einer möglichst hohen Auflösung (Genauigkeit) der Erfassung der Parklückenlänge in Fahrtrichtung.

Dadurch, dass nach Erreichen einer sich an die minimale Parklückenlänge anschließenden Zusatzlänge die Messempfangszeit nur vergrößert wird, wenn kein Objekt in einem möglichen Parkbereich des Kraftfahrzeuges detektiert wurde, ist es sinnvoll, wieder einen größeren Erfassungsbereich auf das Vorhandensein von Objekten zu überwachen. Damit kann beispielsweise ein weiter entfernter Bordstein neben der Parklücke oder ein Fahrbahnverlauf erfasst werden. Nach Erreichen der minimal notwendigen Parklückenlänge ist offensichtlich, dass das Fahrzeug auf jeden Fall in die zurückliegende Parklücke passen wird, so dass wieder mit der Erfassung eines möglichen Objektes, beispielsweise eines Bordsteins, mit größerer Messempfangszeit fortgefahren werden kann.

Wenn die Messempfangszeit zur Objekterfassung variabel verändert wird, kann eine Objekterfassung mit optimaler bzw. angepasster Messwiederholgeschwindigkeit situationsabhängig vorgenommen werden. Wird beispielsweise ein Objekt erfasst, kann die Messempfangszeit derart eingestellt werden, dass im Wesentlichen nur Objekte bis zu diesem Entfernungsbereich erfasst werden. Dadurch ist eine für diese Situation maximale Wiederholgeschwindigkeit der Messung möglich. Ein Abstandsverlauf in Fahrtrichtung weist somit eine möglichst hohe Genauigkeit (möglichst viele Erfassungspunkte bzw. -daten) auf.

Vorteilhaft ist weiterhin, dass die Ausrichtung des Abstandssensors im Kraftfahrzeug derart gewählt ist, dass bei hochgesetzter Messempfangszeit ein Bordstein als Objekt erkannt wird. Dabei kreuzt ein durch den Abstandssensor ausgestrahlter Messkegel einen Bordstein, der dadurch erfasst werden kann. Im Fahrzeug kann es dabei vorteilhaft sein, die Hauptabstrahlrichtung des Abstandssensors geneigt zur Fahrbahnoberfläche auszuführen.

Es ist auch möglich, einen weiteren Abstandssensor einzusetzen, welcher einen Bordstein oder ein Objekt in einem anderen Abstandsbereich erfassen kann. Die Hauptabstrahlrichtung dieses Sensors ist dabei gegenüber dem ersten Sensor eine andere. Für die Abstandssensoren können dann verschiedene Messempfangszeiten verwendet werden.

Die Figuren zeigen:
- Figur 1:: Schematische Darstellung der erfindungsgemäßen Vermessung einer möglichen Parklücke,
- Figur 2:: Prinzipdarstellung des erfindungsgemäßen Fahrerassistenzsystems,
- Figur 3:: Schematische Darstellung der Ausrichtung eines Abstandssensors in einem Kraftfahrzeug zur Erfassung eines Bordsteins und
- Figur 4:: Darstellung der Abfolge von Aktivierungs- und Messempfangszeit.

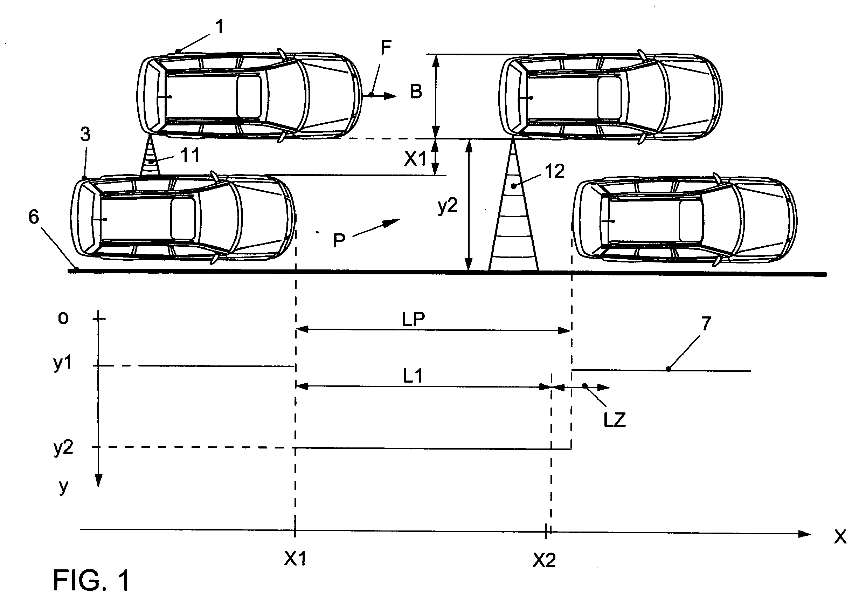

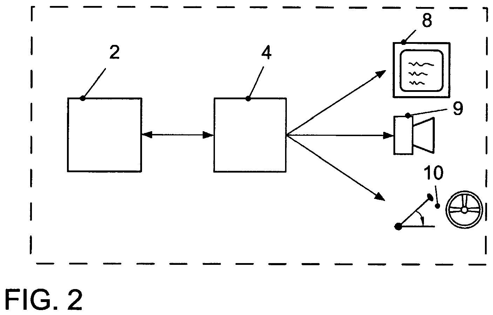

Figur 1 zeigt eine schematische Darstellung des Vorgangs der erfindungsgemäßen Vermessung einer möglichen Parklücke 8. Ein Kraftfahrzeug 1 fährt in Fahrtrichtung F an einem Objekt 3 vorbei. Das Kraftfahrzeug 1 besitzt dabei einen Abstand Y1 zu dem Objekt 3. Dieser Abstand wird durch einen in Figur 2 dargestellten Abstandssensor 2 vermessen, wobei der Sensorstrahlbereich 11 das Objekt 3 erfasst. Die reflektierten Sensorstrahlen werden innerhalb der Messempfangszeit T2 von dem Abstandssensor 2 aufgenommen. In der in Figur 1 links dargestellten Fahrsituation, in der durch den Abstandssensor 2 ein Objekt 3 erfasst wurde, wird mit geringer Messempfangszeit T2 die Abstandsmessung wiederholt. Somit kann der Abstandssensor 2 bzw. eine nachgeschaltete Ansteuervorrichtung 4 mit hoher Genauigkeit den Beginn einer Parklücke P an dem Ort X1 erfassen. Auf der im unteren Bereich der Figur 1 dargestellten Entfernungsachse X ist der Beginn der Parklücke P mit X1 gekennzeichnet. Sobald das Kraftfahrzeug 1 bzw. die Ansteuervorrichtung 4 des Abstandssensors 2 den Beginn der Parklücke P erfasst hat, wird die Messempfangszeit T2 verändert. In dieser Fahrsituation wird die Messempfangszeit T2 vergrößert. Mit der vergrößerten Messempfangszeit T2 können auch von dem Abstandssensor 2 weiter entfernte Objekte 3 erfasst werden. In dem in Figur 1 dargestellten Fall erfasst der Abstandssensor 2 innerhalb der Parklücke P bzw. genauer, innerhalb der minimal nötigen Parklückenlänge L1, einen Bordstein 6. Dabei ist es möglich, dass der Abstandssensor 2 bzw. die Ansteuervorrichtung 4 nur den jeweiligen Abstand Y2 zu dem Bordstein 6 erfasst, es ist jedoch auch denkbar, dass der Abstandsverlauf 7 während der Vorbeifahrt an der Parklücke P erfasst und entsprechend gespeichert und ggf. zusätzlich ausgewertet wird. Die Ansteuervorrichtung 4 kann durch einen automatisch durchgeführten oder fahrerunterstützten Einparkvorgang eine Ausrichtung entlang des Bordsteins 6 oder entlang von Objekten 3 oder der Fahrbahnbegrenzungen vornehmen. Bei einem fahrerunterstützten Einparkvorgang kann die Ansteuervorrichtung 4 oder eine weitere Ansteuervorrichtung Lenkhinweise für den Kraftfahrzeugfahrer geben oder den Lenkvorgang selbständig durchführen. In letzterem Fall behält der Kraftfahrzeugführer die Fahrhoheit durch Betätigung des Gas- bzw. Bremspedals. Auch ein automatisierter Einparkmodus ohne Fahrereingriffe ist durchführbar.

Kurz bevor das Kraftfahrzeug 1 die minimal notwendige Parklückenlänge L1 erreicht hat, wird die Messempfangszeit T2 verringert. In Figur 1 ist dieser Umschaltort auf der Entfernungsachse X mit X2 dargestellt. Diese Umschaltung der Messempfangszeit T2 erfolgt deshalb, weil nun mit hoher Genauigkeit erfasst werden kann, ob sich noch innerhalb der minimal notwendigen Parklückenlänge L1 ein Objekt 3 befindet oder ob gefahrlos ein Einparkvorgang in die Parklücke P vorgenommen werden kann. Da sich das Kraftfahrzeug 1 mit endlicher Fahrgeschwindigkeit in Fahrtrichtung F bewegt, wird zwischen zwei Messungen eine Entfernung X zurückgelegt. Wird mit geringer Messempfangszeit T2 und repetierender Messung gearbeitet, kann der Abstand zwischen den Messorten in X-Richtung reduziert werden. Die Auflösung in X-Richtung steigt dabei durch die Erfassung von möglicht vielen Messpunkten bzw. Messinformationen. Es ist sinnvoll, eine Messung abzubrechen, sofern eine Geschwindigkeits- und/oder Beschleunigungsschwelle überschritten wird, da anzunehmen ist, dass der Fahrzeugführer keinen Einparkvorgang wünscht.

In Figur 1 ist weiterhin ein schematischer Abstandsverlauf 7 unter dem Bordstein 6 dargestellt. Während der Vorbeifahrt des Kraftfahrzeugs 1 an dem linksseitigen Objekt 3 wird ein Abstand Y1 gemessen. An dem mit X1 gekennzeichneten Ort beginnt die Parklücke P, welche in Y-Richtung durch den Bordstein 6 begrenzt ist. Der Bordstein besitzt einen Abstand Y2 zum Kraftfahrzeug 1. Die Parklücke P weist eine Parklückenlänge LP auf, wobei die minimal notwendige Parklückenlänge L1 des Kraftfahrzeugs 1 kürzer als die Parklückenlänge LP ist. Somit wäre ein Einparken des Kraftfahrzeuges 1 innerhalb der Parklücke P möglich. An die minimal notwendige Parklückenlänge L1 schließt sich eine Zusatzlänge LZ an, innerhalb derer die geringe Messempfangszeit zur Objekterfassung beibehalten wird. Wird auch innerhalb der Zusatzlänge LZ kein Objekt 3 erfasst, so wird die Messempfangszeit T2 wiederum vergrößert, um beispielsweise einen Bordstein 6 oder einen Bordsteinverlauf zu erfassen. Die Vergrößerung der der Messempfangszeit T2 kann deshalb vorgenommen werden, da das Kraftfahrzeug 1 offensichtlich in die Parklücke P passt und eine ungenauere Detektion des Parklückenendes hingenommen werden kann. Dabei ist es in einer vorteilhaften Ausführung möglich, die Zusatzlänge LZ so festzulegen, dass sie die größere Ungenauigkeit aufgrund der größeren Messempfangszeit T2 kompensiert. Dabei kann die Zusatzlänge LZ in Abhängigkeit der Messauflösung zur Kompensation der Ungenauigkeit in Fahrtrichtung variabel oder in (Fahrgeschwindigkeits-) Stufen angepasst werden. Die Messempfangszeit T2 und die Fahrgeschwindigkeit gehen in die Messauflösung in Fahrtrichtung ein.

Figur 2 zeigt eine Prinzipdarstellung der erfindungsgemäßen Vorrichtung. Die Vorrichtung, beispielsweise als Fahrassistenzsystem ausgebildet, ist innerhalb eines Kraftfahrzeuges 1 angeordnet, welches in Figur 1 durch ein gestricheltes Rechteck dargestellt ist. Ein Abstandssensor 2 erfasst Abstandsdaten von möglichen Objekten 3 und übermittelt diese an die Ansteuervorrichtung 4. Die Ansteuervorrichtung 4 kann diese Information für den Fahrer aufbereiten, in dem sie beispielsweise auf einer optischen Anzeigevorrichtung den Abstandsverlauf 7 oder Lenkanweisungen zum Einparken des Kraftfahrzeuges 1 darstellt oder eine Parklückenlänge LP größer der minimal notwendigen Parklückenlänge L1 bestätigt. Es ist auch denkbar, dass Informationen über die Parklücke P oder über den Einparkvorgang durch eine akustische Anzeigevorrichtung (z. B. Lautsprecher) ausgegeben werden. Auch eine haptische Anzeigevorrichtung 10, welche in Figur 1 durch ein symbolisiertes Gaspedal und ein Lenkrad dargestellt sind, können dem Fahrzeugführer wichtige Hinweise für einen Einparkvorgang geben. Haptische Rückmeldungen können beispielsweise gegeben werden, wenn die vermessene Parklücke P geringer als die minimal nötige Parklückenlänge L1 ist und der Fahrzeugführer trotzdem einen Einparkvorgang startet oder wenn der Fahrzeugführer eine zu hohe Fahrgeschwindigkeit aufweist, um einen sicheren Einparkvorgang zu gewährleisten oder wenn eine minimale Parklückenlänge erreicht ist. Dabei kann beispielsweise das Fahrpedal einen deutlichen Widerstand (Gegendruck oder ein Vibrieren) aufweisen, wenn der Fahrzeugführer versucht, eine maximale Einparkgeschwindigkeit zu überschreiten.

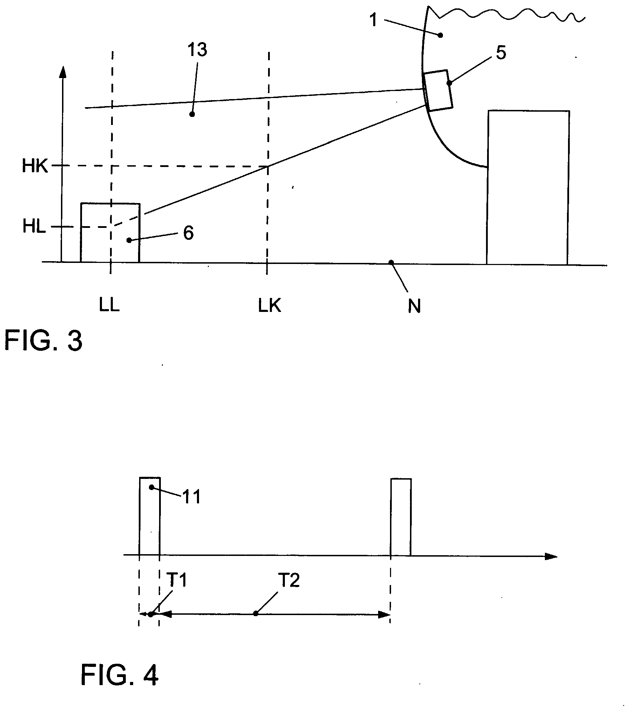

In Figur 3 ist eine schematische Darstellung der Ausrichtung eines Abstandssensors 2 in einem Kraftfahrzeug 1 zur Erfassung eines Bordsteins 6 dargestellt. Der Abstandssensor 2 ist in diesem Ausführungsbeispiel als Ultraschallsensor 5 im Kraftfahrzeug 1 eingebaut. Dieses 1 ist in Figur 3 ausschnittsweise durch ein auf Fahrbahnniveau stehendes Fahrzeugrad mit einem sich anschließenden Karosserieverlauf skizziert. Der Ultraschallsensor 5 sendet Schallwellen in einem Sensorstrahlbereich 13 aus. Dieser Sensorstrahlbereich 13 kann sich im Raum kegelförmig vom Ultraschallsensor 5 ausbreiten. Wird durch die Ansteuervorrichtung 4 eine kurze bzw. geringe Messempfangszeit T2 eingestellt, so können reflektierte Ultraschallsignale bis zu einer Reichweite LK vom Kraftfahrzeug 1 aus erfasst werden. Dieser Erfassungsbereich erstreckt sich mit höherer bzw. größerer Messempfangszeit T2 bis zu der Reichweite LL. Die minimalen Objekthöhen bei den jeweiligen Reichweiten mit kurzer bzw. langer Messempfangszeit LK bzw. LL sind in Figur 3 durch HK bzw. HL mit korrespondierenden gestrichelten Linien eingezeichnet. Aufgrund der geneigten Einbauart des Ultraschallsensors 5 ist die minimale Erfassungshöhe HL bei langer Messempfangszeit T2 derart ausgestaltet, dass ein Bordstein 6 erfasst werden kann. Somit kann der Abstandssensor 2 im Bereich der Reichweite LL einen Bordstein 6 bzw. einen Bordsteinverlauf erfassen. Als Abstandssensoren können auch Radar- und/oder Lasersensoren zum Einsatz kommen.

In Figur 4 ist eine Prinzipdarstellung der Abfolge von Aktivierungszeit T1 und Messempfangszeit T2 dargestellt. Zu Beginn der Messung wird ein Messsignal M, welches in Form eines Impulses ausgesendet werden kann, während einer Aktivierungszeit T1 ausgestrahlt. An die Aktivierungszeit T1 schließt sich eine Messempfangszeit T2 an, während derer reflektierte Sensorstrahlen erfasst werden. Nach der Aktivierungszeit T1 und der Messempfangszeit T2 ist ein Messzyklus abgeschlossen. An diesem Messzyklus können sich direkt oder mit einer Pause weitere Messzyklen anschließen. Um die Genauigkeit eines sich bewegenden Kraftfahrzeugs 1 zu erhöhen, wird erfindungsgemäß die Messempfangszeit T2 verändert. Es ist auch denkbar, dass die Aktivierungszeit T1 allein oder zusammen mit der Messempfangszeit T2 verändert wird.

## Patentansprüche

1. Verfahren zur Vermessung einer möglichen Parklücke (P) durch ein an der Parklücke (P) vorbeifahrendes Kraftfahrzeug (1), wobei
durch eine Erfassungsvorrichtung im Kraftfahrzeug (1) die Länge der Parklücke (LP) ermittelt wird,
während einer Aktivierungszeit (T1) mit einem Abstandssensor (2) Messsignale (M) ausgesendet und innerhalb einer Messempfangszeit (T2) an Objekten (3) reflektierte Messsignale (M) durch den Abstandssensor (2) erfasst werden und die Messempfangszeit (T2) zur Vermessung einer Parklückenlänge (LP) verändert wird,
**dadurch gekennzeichnet, dass**
die Messempfangszeit (T2) nach Detektion eines Anfangs der Parklücke (P) vergrößert oder auf einen Maximalwert gesetzt wird, und
die Messempfangszeit (T2) bei Vorbeifahrt an der Parklücke (P) vor einer minimal notwendigen Parklückenlänge (L1) oder im Bereich der minimalen Parklückenlänge (L1) verkleinert oder auf einen Minimalwert gesetzt wird.

2. Verfahren nach Anspruch 1, **dadurch gekennzeichnet, dass** die Messempfangszeit (T2) nach Erreichen einer sich an die minimale Parklückenlänge anschließenden Zusatzlänge (LZ), innerhalb der die verkleinerte Messempfangszeit beibehalten wird, nur vergrößert wird, wenn kein Objekt (3) in einem möglichen Parkbereich (P) des Kraftfahrzeugs (1) detektiert wurde.

3. Verfahren nach einem der Ansprüche 1 bis 2, **dadurch gekennzeichnet, dass** die Messempfangszeit (T2) zur Objekterfassung variabel verändert wird.

4. Verfahren nach einem der Ansprüche 1 bis 3, **dadurch gekennzeichnet, dass** die Ausrichtung des Abstandssensors (2) im Kraftfahrzeug (1) derart gewählt ist, dass bei hochgesetzter Messempfangszeit (T2) ein Bordstein (6) als Objekt (3) erkannt wird.

5. Vorrichtung für ein Kraftfahrzeug (1), wobei die Vorrichtung zur Durchführung des Verfahrens nach einem der vorangegangenen Ansprüche eingerichtet und ausgelegt ist, mit mindestens einem Abstandssensor (2) zum Erfassen eines überwiegend seitlichen Abstandes (Y) zwischen dem Kraftfahrzeug (1) und Objekten (3) und mit einer Ansteuervorrichtung (4) zum Ansteuern des Abstandssensors (2) wobei der Abstandssensor (2) während einer Aktivierungszeit (T1) Messsignale (M) aussendet und während einer Messempfangszeit (T2) das von mindestens einem Objekt (3) reflektierte Messsignal (M) empfängt, und durch die Ansteuervorrichtung (4) die Messempfangszeit (T2) des Abstandssensors (2)) zwischen mindestens zwei Einstellungen für Empfangszeiten (T2) veränderbar ist,
**dadurch gekennzeichnet, dass**
die Ansteuervorrichtung (4) die Messempfangszeit (T2) nach Detektion eines Anfangs der Parklücke (P) vergrößert oder auf einen Maximalwert setzt, und
die Ansteuervorrichtung (4) die Messempfangszeit (T2) bei Vorbeifahrt an der Parklücke (P) vor einer minimal notwendigen Parklückenlänge (L1) oder im Bereich der minimalen Parklückenlänge (L1) verkleinert oder auf einen Minimalwert setzt.

6. Vorrichtung nach Anspruch 5, **dadurch gekennzeichnet, dass** die Messempfangszeit (T2) durch die Ansteuervorrichtung (4) derart veränderbar ist, dass im Wesentlichen ein Abstand (Y) kleiner einer Fahrzeugbreite(B), insbesondere bis etwa 1,5 m, überwacht wird.

7. Vorrichtung nach Anspruch 5 oder 6, **dadurch gekennzeichnet, dass** die Messempfangszeit (T2) durch die Ansteuervorrichtung (4) derart veränderbar ist, dass im Wesentlichen ein Abstand (Y) kleiner von zwei Fahrzeugbreiten (B), insbesondere bis etwa 3,5 m, überwacht wird.

8. Vorrichtung nach einem der Ansprüche 5 bis 7, **dadurch gekennzeichnet, dass** mindestens ein Abstandssensor (2) als Ultraschallsensor (5) ausgeführt ist.

9. Vorrichtung nach einem der Ansprüche 5 bis 8, **dadurch gekennzeichnet, dass** der Abstandssensor (2) im Kraftfahrzeug (1) derart angeordnet ist, dass ein Bordstein (6) oder eine Fahrbahnbegrenzung innerhalb mindestens einer der Messempfangszeiten (T2) erfassbar ist.

10. Vorrichtung nach einem der Ansprüche 5 bis 9, **dadurch gekennzeichnet, dass** mit mindestens einem Abstandssensor (2) und/oder der Ansteuervorrichtung (4) ein Abstandsverlauf (7) zu einem Objekt und/oder einer Fahrbahnbegrenzung erfassbar ist.

11. Vorrichtung nach einem der Ansprüche 5 bis 10, **dadurch gekennzeichnet, dass** die Messempfangszeit (T2) geschwindigkeits- und/oder fahrzeugumgebungs- und/oder positionsabhängig veränderbar ist.

12. Vorrichtung nach einem der Ansprüche 5 bis 11, **dadurch gekennzeichnet, dass** die Messempfangszeit (T2) aufgrund eines Fahrverhaltens des Fahrzeugführers veränderbar ist.

13. Vorrichtung nach einem der Ansprüche 5 bis 12, **dadurch gekennzeichnet, dass** eine erfasste Länge (LP) einer möglichen Parklücke (P) größer einer minimalen Parklücke (L1) im Kraftfahrzeug (1) akustisch und/oder optisch und/oder haptisch signalisierbar ist.

14. Vorrichtung nach Anspruch 13, **dadurch gekennzeichnet, dass** der Wert der minimal notwendigen Parklückenlänge (L1) und/oder einer sich an die minimale Parklückenlänge anschließenden Zusatzlänge (LZ) im Kraftfahrzeug (1) einstellbar ist.

## Claims

1. A method for measuring a possible parking space (P) by a motor vehicle (1) driving by the parking space (P), wherein
the length of the parking space (LP) is determined by a detection device in the motor vehicle (1),
during an activation period (T1) measuring signals (M) are transmitted with a distance sensor (2) and within a measuring reception time (T2) measuring signals (M) reflected to objects (3) are detected by the distance sensor (2) and the measuring reception time (T2) for measuring a parking space length (LP) is changed,
**characterized in that**
the measuring reception time (T2) is increased after detection of a beginning of the parking space (P) or is set to a maximum value and
the measuring reception time (T2) is reduced or set to a minimum value when driving past the parking space (P) in front of a minimum necessary parking space length (L1) or in the area of the minimum parking space length (L1).

2. The method according to Claim 1, **characterized in that** the measuring reception time (T2) after reaching an additional length (LZ) connected to the minimum parking space length, within which the reduced measuring reception time is maintained, is only increased, if no object (3) was detected in a possible parking area (P) of the motor vehicle (1).

3. The method according to any one of Claims 1 to 2 **characterized in that** the measuring reception time (T2) for the object detection is variably changed.

4. The method according to any one of Claims 1 to 3 **characterized in that** the alignment of the distance sensor (2) in the motor vehicle (1) is selected in such a manner that when the measuring reception time (T2) is set high a curb (6) is detected as object (3).

5. A device for a motor vehicle (1), wherein the device is configured and designed in order to implement the method according to any one of the preceding claims with at least one distance sensor (2) for detecting a predominantly lateral distance (Y) between the motor vehicle (1) and objects (3) and with a control device (4) for controlling the distance sensor (2) wherein the distance sensor (2) transmits measuring signals (M) during an activation period (T1) and during a measuring reception time (T2) receives the measuring signal (M) reflected by at least one object (3), and the measuring reception time (T2) of the distance sensor (2) between at least two settings for reception times (T2) can be modified by means of the control device (4),
**characterized in that**
the control device (4) increases the measuring reception time (T2) after detection of a beginning of the parking space (P) or sets a maximum value, and the control device (4) reduces or sets the measuring reception time (T2) to a minimum value when driving past the parking space (P) in front of a minimum necessary parking space length (L1) or in the area of the minimum parking space length (L1).

6. The device according to Claim 5, **characterized in that** the measuring reception time (T2) can be modified by the control device (4) in such a manner that a distance (Y) of less than one vehicle width (B), in particular up to about 1.5 m, is substantially monitored.

7. The device according to Claim 5 or 6 **characterized in that** the measuring reception time (T2) can be modified by the control device (4) in such a manner that a distance (Y) of less than two vehicle widths (B), in particular, up to about 3.5 m, is substantially monitored.

8. The device according to any one of Claims 5 to 7, **characterized in that** at least one distance sensor (2) is designed as ultrasonic sensor (5).

9. The device according to any one of Claims 5 to 8, **characterized in that** the distance sensor (2) is arranged in the motor vehicle (1) in such a manner that a curb (6) or a lane boundary can be detected within at least one of the measuring reception times (T2).

10. The device according to any one of Claims 5 to 9, **characterized in that** with at least one distance sensor (2) and/or the control device (4) a distance course (7) to an object and/or a lane boundary can be detected.

11. The device according to any one of Claims 5 to 10, **characterized in that** the measuring reception time (T2) can be modified depending on speed, and/or vehicle environment and/or position.

12. The device according to any one of Claims 5 to 11, **characterized in that** the measuring reception time (T2) can be modified based on a driving behavior of the vehicle driver.

13. The device according to any one of Claims 5 to 12 **characterized in that** a detected length (LP) of a possible parking space (P) larger than a minimum parking space (L1) can be signaled in the motor vehicle (1) acoustically and/or optically and/or haptically.

14. The device according to Claim 13 **characterized in that** the value of the minimum necessary parking space length (L1) and/or of the additional length (LZ) connected to the minimum parking space length can be set in the motor vehicle (1).

## Revendications

1. Procédé de mesure d'une place de stationnement (P) possible par un véhicule automobile (1) passant le long de la place de stationnement (P), moyennant quoi
la longueur de la place de stationnement (LP) est déterminée par un dispositif de mesure dans le véhicule automobile (1),
pendant un temps d'activation (T1), avec un capteur de distance (2), des signaux de mesure (M) sont émis et les signaux de mesure (M) réfléchis au niveau des objets (3), pendant un temps de réception de mesure (T2), sont détectés par le capteur de distance (2) et le temps de réception de mesure (T2) pour la mesure d'une longueur de place de stationnement (LP) est modifiée,
**caractérisé en ce que**
le temps de réception de mesure (T2) est augmenté après la détection d'un début de la place de stationnement (P) ou est réglé à une valeur maximale et
le temps de réception de mesure (T2) est diminué lors du passage devant la place de stationnement (P) avant une longueur de place de stationnement (L1) minimale nécessaire ou au niveau de la longueur de place de stationnement minimale (L1) ou réglé à une valeur minimale.

2. Procédé selon la revendication 1, **caractérisé en ce que** le temps de réception de mesure (T2) n'est augmenté, après avoir atteint une longueur supplémentaire (LZ) se rajoutant à la longueur de place de stationnement minimale, à l'intérieur de laquelle le temps de réception de mesure diminué est maintenu, que lorsque aucun objet (3) n'a été détecté dans une zone de stationnement (P) possible du véhicule automobile (1).

3. Procédé selon l'une des revendications 1 à 2, **caractérisé en ce que** le temps de réception de mesure (T2) peut être modifié de manière variable pour la détection d'un objet.

4. Procédé selon l'une des revendications 1 à 3, **caractérisé en ce que** l'orientation du capteur de distance (2) dans le véhicule automobile (1) est choisie de façon à ce que, lorsque le temps de réception de mesure (T2) a été augmenté, une bordure (6) est détectée en tant qu'objet (3).

5. Dispositif pour un véhicule automobile (1), ce dispositif étant conçu et réalisé pour l'exécution du procédé selon l'une des revendications précédentes, avec au moins un capteur de distance (2) pour la mesure d'une distance (Y), majoritairement latérale, entre le véhicule automobile (1) et des objets (3) et avec un dispositif de commande (4) pour le contrôle du capteur de distance (2), le capteur de distance (2) émettant, pendant un temps d'activation (T1), des signaux de mesure (M) et recevant, pendant un temps de réception de mesure (T2), le signal de mesure (M) réfléchi par au moins un objet (3) et le dispositif de commande (4) permettant de modifier le temps de réception de mesure (T2) du capteur de distance (2) entre au moins deux réglages pour des temps de réception (T2),
**caractérisé en ce que**
le dispositif de commande (4) augmente le temps de réception de mesure (T2) après la détection d'un début de la place de stationnement (P) ou le règle à une valeur maximale et
le dispositif de commande (4) diminue le temps de réception de mesure (T2) lors d'un passage devant la place de stationnement (P) avant une longueur de place de stationnement (L1) minimale nécessaire ou au niveau de la longueur de place de stationnement minimale (L1) ou le règle à une valeur minimale.

6. Dispositif selon la revendication 5, **caractérisé en ce que** le temps de réception de mesure (T2) peut être modifié par le dispositif de commande (4) de façon à ce que, globalement, une distance (Y) inférieure à une largeur de véhicule (B), plus particulièrement jusqu'à environ 1,5 m, est surveillée.

7. Dispositif selon la revendication 5 ou 6, **caractérisé en ce que** le temps de réception de mesure (T2) peut être modifié par le dispositif de commande (4) de façon à ce que, globalement, une distance (Y) inférieure à deux largeurs de véhicule (B), plus particulièrement jusqu'à environ 3,5 m, est surveillée.

8. Dispositif selon l'une des revendications 5 à 7, **caractérisé en ce qu'**au moins un capteur de distance (2) est conçu comme un capteur à ultra-sons (5).

9. Dispositif selon l'une des revendications 5 à 8, **caractérisé en ce qu'**au moins un capteur de distance (2) est disposé dans le véhicule automobile (1) de façon à ce qu'une bordure (6) ou une limitation de la chaussée puisse être détectée pendant au moins un des temps de réception de mesure (T2).

10. Dispositif selon l'une des revendications 5 à 9, **caractérisé en ce que**, avec au moins un capteur de distance (2) et/ou le dispositif de commande (4), une évolution de la distance (7) par rapport à un objet et/ou à une limitation de la chaussée peut être mesurée.

11. Dispositif selon l'une des revendications 5 à 10, **caractérisé en ce que** le temps de réception de mesure (T2) peut être modifié en fonction de la vitesse et/ou de l'environnement du véhicule et/ou de la position.

12. Dispositif selon l'une des revendications 5 à 11, **caractérisé en ce que** le temps de réception de mesure (T2) peut être modifié sur la base du comportement de conduite du conducteur du véhicule.

13. Dispositif selon l'une des revendications 5 à 12, **caractérisé en ce qu'**une longueur (LP) mesurée d'une place de stationnement (P) possible supérieure à une place de stationnement minimale (L1) peut être signalée dans le véhicule automobile (1) de manière acoustique et/ou optique et/ou haptique.

14. Dispositif selon la revendication 13, **caractérisé en ce que** la valeur de la longueur de place de stationnement minimale nécessaire (L1) et/ou d'une longueur supplémentaire (LZ) se rajoutant à la longueur de place de stationnement minimale peut être réglée dans le véhicule automobile (1).
